Europäisches Patentamt

European Patent Office

Office européen des brevets

(11) Publication number:
**0 195 682**
**B1**

(12) **EUROPEAN PATENT SPECIFICATION**

(45) Date of publication of patent specification: **13.06.90**

(21) Application number: **86302089.7**

(22) Date of filing: **21.03.86**

(51) Int. Cl.⁵: **F 16 J 15/32**

(54) Seals.

(30) Priority: **22.03.85 GB 8507561**
**21.06.85 GB 8515788**

(43) Date of publication of application:
**24.09.86 Bulletin 86/39**

(45) Publication of the grant of the patent:
**13.06.90 Bulletin 90/24**

(84) Designated Contracting States:
**DE FR GB IT NL SE**

(56) References cited:
**FR-A-2 529 985**
**GB-A-1 478 273**
**US-A-3 497 225**
**US-A-4 344 631**

**PATENT ABSTRACTS OF JAPAN, vol. 4, no. 88
(M-17)570r, 24th June 1980; & JP - A - 55 47050
(ARAI SEISAKUSHO K.K.) 02-04-1980
idem**

(73) Proprietor: **DOWTY SEALS LIMITED**
**Ashchurch**
**Tewkesbury Gloucestershire GL20 8JS (GB)**

(72) Inventor: **Brown, David Wyndham James**
**26, Miserden Road**
**Cheltenham Gloucestershire (GB)**
Inventor: **Stanley, Clive John**
**63, Hillview Lane Twyning**
**Tewkesbury Gloucestershire (GB)**

(74) Representative: **Bousfield, Roger James**
**Patents Department Dowty Group Services**
**Limited Arle Court**
**Cheltenham, Glos. GL51 0TP (GB)**

Courier Press, Leamington Spa, England.

## Description

This invention relates to seals which include sealing members of fluorine resin and which are intended for use between two relatively-rotatable parts. Examples of such seals are rotary shaft seals and rotary face seals.

In the specification of our co-pending U.K. Patent No. 2123903 we have disclosed such a seal in which the sealing member, of fluorine resin, has a side which terminates in an edge and which has fluid-returning means comprising a plurality of depressions adjacent to and disposed about said edge. In this case each depression is in the form of a quadrilateral with two opposite sides substantially parallel to said edge, one being longer than, and closer to said edge than, the other, and each of the other two sides being inclined at an acute angle to the longer of the two parallel sides, and said edge and at least part of the side adjacent said edge, in use, being engageable with one of the two relatively-rotatable parts to be sealed. In other examples of such seals the fluid-returning means are of different patterns, being again adjacent to and disposed about the respective said edge.

U.S. Patent Specification No. 3497225 also discloses a similar seal with fluid-returning means to form a dynamic seal but which also incorporates a static seal in the form of an annular sealing lip that is separated from the fluid-returning means by an annular groove. The action of the fluid-returning means when the shaft is rotating serves to reduce the pressure in the groove and thus reduces the contact pressure between the sealing lip and the shaft, thereby reducing wear. The groove thus contacts the shaft in order to produce a zone of low pressure.

It is an object of this invention to provide a seal which has improved shaft-engaging characteristics and which in consequence has an improved performance at higher shaft rotational speeds.

According to this invention there is provided a seal for use between two relatively-rotatable parts, including a sealing member of fluorine resin which has a side terminating at a circumferential edge and having a first annular portion adjacent the edge in which is formed fluid-returning means which, in use, contacts one of the two relatively-rotatable parts to be sealed, the sealing member having a second annular portion in which is defined a continuous groove parallel to said edge but spaced from the edge by the first annular portion, characterised in that said continuous groove, in use, does not contact a part to be sealed, but ensures full contact between the first annular portion and one of the two parts to be sealed, in permitting greater flexing of the sealing member in the area of said groove.

The fluid-returning means may comprise a plurality of depressions circumferentially spaced apart one from another around said sealing member.

The depressions may be so spaced from said edge as to leave a continuous uninterrupted annular sealing band adjacent said edge.

The depressions may each be in the form of a quadrilateral with two opposite sides substantially parallel to said edge, one being longer than, and closer to said edge than, the other, and each of the other two sides being inclined at an acute angle to the longer of the two parallel sides.

The said other two sides may be straight, or alternatively curved.

The sealing member may be retained in the seal by being confined between inner and outer cases formed by two interfitting flanged cylindrical portions.

Alternatively the sealing member may be suitably bonded to a case in the form of a flanged cylindrical portion.

The sealing member may comprise an insert which is of generally annular form, which incorporates said plurality of depressions in the said side thereof and which is bonded to another member of generally annular form and of flexible material forming another part of said seal.

Preferably said other member is generally of U-shaped cross-section and suitably reinforced by a metallic member of annular form and of right-angular cross-section, or, is of such other cross-section as to enable it to be suitably bonded to a metallic member of annular form and of right-angular cross-section. In each of these cases the circumferential outer surface of said other member immediately adjacent said insert may be encircled by a coiled spring ring for at least assisting in maintaining said edge of said insert in sealing engagement with one of two relatively-rotatable parts.

The seal may be provided with a second sealing member spaced apart from the first said sealing member.

The said continuous groove may be of semi-circular cross section or substantially so, triangular cross-section or substantially so, rectangular cross-section or substantially so, or, of any other suitable cross-section.

Eight embodiments of the invention will now be described by way of example with reference to the accompanying drawings of which:

Figure 1 is a sectional view of a rotary shaft seal in accordance with one embodiment of the invention,

Figure 2 is a view of part of the shaft-engaging side of the sealing member of the seal,

Figure 3 is a developed view of part of the interference pattern of the seal with an associated shaft,

Figure 4 is a view similar to Figure 3 but showing a slight variation in the shape of the interference pattern in accordance with the second embodiment of the invention,

Figure 5 is a sectional view of a rotary shaft seal in accordance with the third embodiment of the invention,

Figure 6 is a cross-section of a rotary shaft seal in accordance with the fourth embodiment of the invention,

Figure 7 is a cross-section of a rotary shaft seal in accordance with the fifth embodiment of the invention,

Figure 8 is a cross-section of a rotary shaft seal in accordance with the sixth embodiment of the invention,

Figure 9 is a cross-section of a rotary shaft seal in accordance with the seventh embodiment of the invention,

Figure 10 is a cross-section of a rotary shaft seal in accordance with the eighth embodiment of the invention, and

Figures 11(a) to 11(d) are scrap views of alternative groove shapes of the sealing members or inserts shown in Figures 1 to 10.

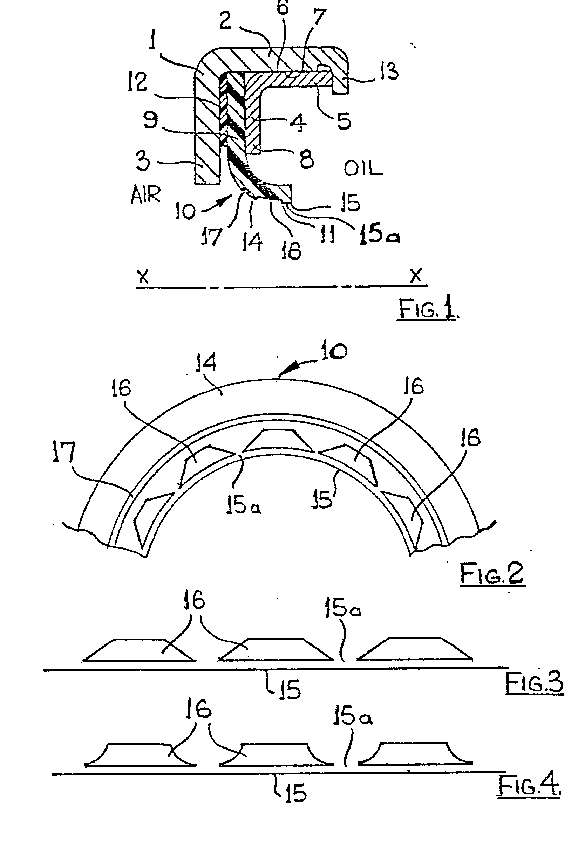

Referring to Figures 1 to 3 of the accompanying drawings, the rotary shaft seal of the first embodiment, which is symmetrical about axis X - X, includes an annular metallic outer case 1, for example of mild steel or a suitable alloy, with a cylindrical portion 2 and a radial flange 3. There is also an inner case 4 with a metallic cylindrical portion 5 which nests in the cylindrical portion 2, so that the outer surface 6 of portion 5 directly bears against the inner cylindrical wall 7 of portion 2. The inner case also has a radial flange 8. Between flanges 3 and 8 is a flat radial outer portion 9 of a sealing member or element 10 made from fluorine resin, for example polytetrafluoroethylene. Element 10 also has a portion 11 which is a curved extension, in cross-section, of portion 9.

A gasket 12 is preferably provided between element 10 and flange 3 to ensure sealing between element 10 and case 1.

The radial flange 8 is forced towards radial flange 3 so as to compress portion 9, and to hold it tightly, and to compress gasket 12. Outer case 1 has an end portion 13 turned over to lock inner case 4 tightly in position.

The portion 11 of element 10 has a side surface 14 which, when the seal is in use, will be the side of the seal exposed to air. The side surface 14 terminates in a sealing edge 15.

The side surface 14 has formed therein, adjacent to and disposed at intervals about circumferential sealing edge 15, fluid-returning means which comprises a plurality of grooves or depressions 16 formed by a coining or machining operation. As seen in Figure 2, each depression has the shape of a quadrilateral with two of its opposite sides parallel, the one to the other. One of the parallel sides is longer than, and is closer to the edge 15 than, the other of the two parallel sides, being adjacent that edge so as to form an annular sealing band 15a immediately adjacent that edge. The other two sides of the quadrilateral are of similar length, are straight and are inclined at an acute angle to the longer of the two parallel sides.

The seal also has a continuous groove 17 of semicircular cross-section formed in the side surface 14. The groove is located behind the fluid-returning means 16, that is to the left thereof in Figure 1, and is parallel to edge 15.

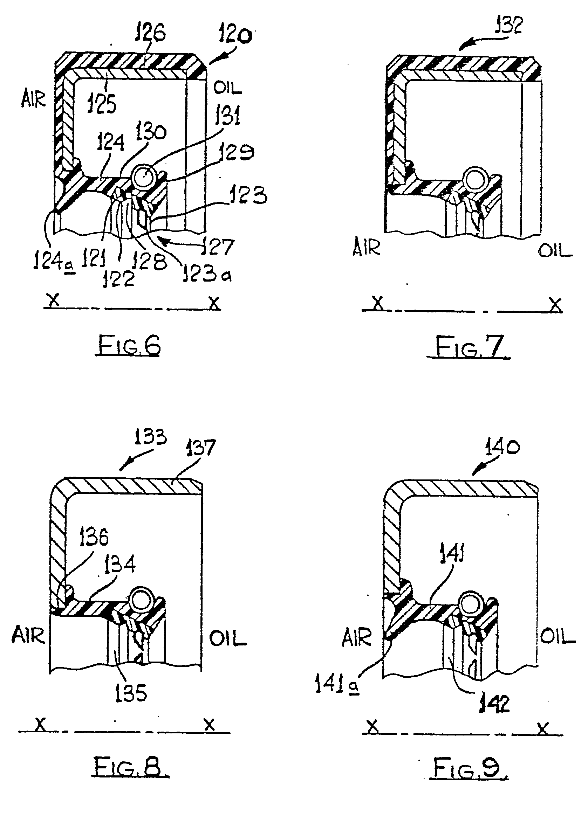

When used between two relatively-rotatable parts one of which say is a rotatable shaft, the outer case 1 may be held in a fixed housing. The sealing edge 15 of side surface 14, and part (that is band 15a) of that side surface which is adjacent that edge, will have an interference fit with the rotatable shaft. The presence of the depressions 16 gives an interference pattern with the shaft of the kind shown in Figure 3.

Irrespective of the direction of rotation of the shaft, any liquid which leaks under the edge from the oil side of the seal to the air side will be moved by rotation of the shaft into and through one of the depressions 16. When it meets an inclined side of a depression 16, it will be channelled back to the oil side, since each inclined side forms, effectively, a sharp edge which is in engagement with the shaft.

The continuous groove 17 permits greater flexing of the part of the side surface 14 adjacent edge 15 so that it can lie flatter on the associated shaft.

Figure 4 is similar to Figure 3 but shows that in the second embodiment of the invention the said other two sides of the depressions 16 are not straight as in the first embodiment, but instead are curved.

The seal of the third embodiment shown in section in Figure 5 includes a sealing member or element 21 similar to the element 10 shown in Figures 1 to 3 and thus having fluid-returning means in the form of depressions as at 22 and a continuous groove 23 of semi-circular cross-section which is formed in side surface 24, which is located behind the fluid-returning means and which is parallel to the edge 25 of element 21. The element is again of polytetrafluoroethylene but in this embodiment is bonded by means of a suitable adhesive to the flange of a flanged cylindrical case 26 of mild steel or suitable alloy. The adhesive is applied to the interfaces 27, 28 and bonding takes place under heat and pressure for a predetermined time.

As with the first embodiment above described with reference to the drawings, the provision of the continuous groove 23 in element 21 permits greater flexing of the part of the side surface 24 adjacent edge 25 so that it can lie flatter on the associated shaft.

With reference now to Figure 6 in the fourth embodiment of the invention the rotary shaft seal 120 includes a sealing member 121 which is formed by a frusto-conical annular insert of polytetrafluoroethylene having a side surface 122 terminating in a circumferential edge 123 which is intended sealingly to engage the surface of a shaft (not shown). This insert is bonded by a suitable adhesive to another member 124 of generally annular form, of U-shaped cross-section and of rubber or rubber-like material. As shown in the drawing this member has an inward projection 124a forming a dust lip and is reinforced by a metallic member 125. Member 125 is of annular form and of right-angular cross-section. It is simply fitted to, or alternatively bonded by a suitable adhesive to, member 124, and is seated in the annular recess 126 therein which is of complementary shape thereto.

The side surface 122 of insert 121, when the seal is in use, will be the side thereof exposed to air. This side surface has formed therein, by a coining or machining operation, fluid-returning means disposed at equal intervals around the side surface. The fluid-returning means comprises a plurality of depressions 127. In a manner similar to the fluid-returning means of Figures 1 to 5 each such depression has a shape of a quadrilateral with two of its opposite sides parallel, the one to the other. One of the parallel sides is longer than, and is closer to the sealing edge 123 than, the other of the two parallel sides, thus to form an annular sealing band 123a immediately adjacent the edge 123. The other two sides of the quadrilateral are of similar length and are inclined at an acute angle to the longer of the two parallel sides.

The insert 121 also has a continuous groove 128 of triangular cross-section formed in side surface 122. This groove is located behind the fluid-returning means 127, that is to the left thereof in this Figure, and is parallel to the edge 123.

Member 124 is provided with annular groove 129 of semi-circular cross-section in the circumferential surface 130 thereof and immediately adjacent insert 121. This groove receives a coiled spring ring 131 which at least assists in maintaining edge 123 and band 123a in sealing engagement with the associated shaft.

When used between two relatively-rotatable parts, one of which say is a rotatable shaft, the member 124 reinforced by member 125 is held in a fixed housing. The sealing edge 123 of side surface 122, and part of that side surface (that is band 123a) which is adjacent the edge, will have an interference fit with the rotatable shaft. The presence of the depressions 127 gives an interference pattern with the shaft similar to those shown in Figures 2, 3 or 4.

Irrespective of the direction of rotation of the shaft, any liquid which leaks under the edge 123 from the oil side of the seal to the air side will be moved, by rotation of the shaft, into and through one of the depressions. When it meets an inclined side of the depression, it will be channelled back to the oil side, since each inclined side forms, effectively, a sharp edge which is in engagement with the shaft.

Thus as with the previous embodiments the continuous groove 128 permits greater flexing of the part of side surface 122 adjacent edge 123 so that it can lie flatter on the shaft.

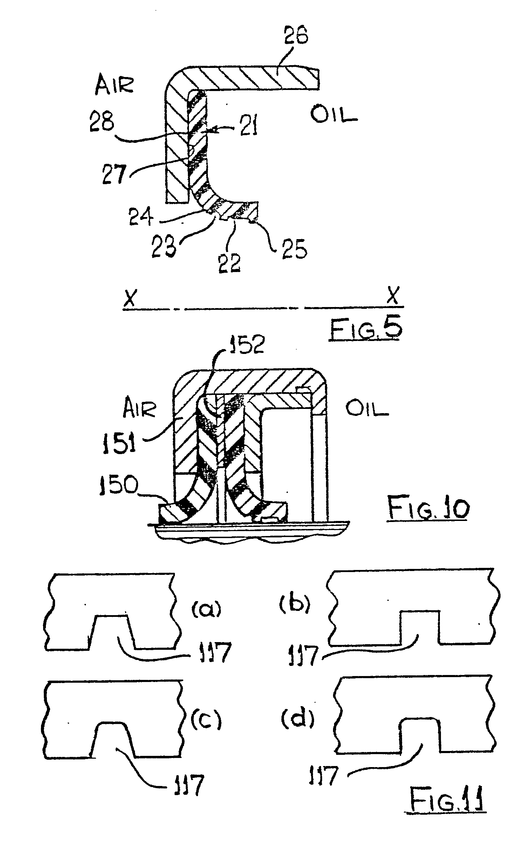

The construction of rotary shaft seal 132 in accordance with the fifth embodiment of the invention shown in Figure 7 is very similar to that of Figure 6 but does not have an inward projection 124a forming a dust lip.

The construction of rotary shaft seal 133 in accordance with the sixth embodiment of the invention shown in Figure 8 differs from those of Figures 6 and 7 in that the member 134 which carries the polytetrafluoroethylene insert or sealing member 135 is not of U-shaped cross-section but instead is of the cross-sectional shape shown, having an annular recess 136 at which that member 134 is bonded, by use of a suitable adhesive, to a metallic annular member 137 of right-angular cross-section. The insert 135 is itself similar in construction to the inserts of Figures 6 and 7.

The construction of rotary shaft seal 140 in accordance with the seventh embodiment shown in Figure 9 is similar to that of Figure 8 but is provided with an inward projection 141a forming a dust lip on the member 141 which carries insert 142.

The seal shown in section in Figure 10 in accordance with the eighth embodiment is similar to that shown in Figures 1 to 3 except that it has a second sealing member or element 150 held between the radial flange 151 and the gasket 152. This element 150 acts to resist the ingress of dust and other foreign matter from the exterior to the interior of the seal.

The invention is in no way limited to the provision of continuous grooves 17, 23, 128 of semi-circular cross-section or triangular cross-section as shown in the drawings, as in other embodiments continuous grooves of other suitable cross-sections may instead be provided. Figures 11(a) to 11(d) show four such alternative cross-sections at 117 which are rectangular or substantially so.

Instead of the fluid-returning means being as described with reference to the accompanying drawings, in other embodiments of the invention the fluid-returning means may be generally similar but include circumferentially-spaced depressions of other suitable shape and/or disposition, or again the fluid-returning means may be of other suitable pattern, but nevertheless include the said continuous groove of appropriate cross-section.

Further, the invention is not limited in its application to rotary shaft seals as in other embodiments of the invention it may with advantage be applied to rotary face seals.

Finally, although in the embodiments above described with reference to the drawings the medium being sealed is oil, in alternative embodiments of the invention that medium may be any other fluid, for example water, an emulsion or a gas, of compatible type.

**Claims**

1. A seal for use between two relatively-rotatable parts, including a sealing member (10, 21, 121, 135, 42) of fluorine resin which has a side (14, 24, 122) terminating at a circumferential edge (15, 25, 123) and having a first annular portion adjacent the edge in which is formed fluid-returning means (16, 22, 127) and which, in use, contacts one of the two relatively-rotatable parts to be sealed, the sealing member having a second annular portion in which is defined a continuous groove (17, 23, 117, 128) parallel to the edge (15, 25, 123) but spaced from the edge by the first annular portion, characterised in that said continuous groove (17, 23, 117, 128), in use, does not contact a part to be sealed, but ensures full contact between the first annular portion and one of the two parts to be sealed, in permitting greater flexing of the sealing member (10) in the area of said groove (17, 23, 117, 128).

2. A seal as claimed in claim 1, characterised in that the fluid-returning means (16, 22, 127) comprises a plurality of depressions circumferentially spaced apart one from another around said sealing member (10, 21, 121, 135, 142).

3. A seal as claimed in claim 2, characterised in that said depressions (16, 22, 127) are so spaced from said edge (15, 25, 123) as to leave a continuous uninterrupted annular sealing band (15a, 123a) adjacent said edge.

4. A seal as claimed in claim 3, characterised in that said depressions (16, 22, 127) are each in the form of a quadrilateral with two opposite sides substantially parallel to said edge (15, 25, 123), one being longer than, and closer to said edge than, the other, and each of the other two sides being inclined at an acute angle to the longer of the two parallel sides.

5. A seal as claimed in claim 4, characterised in that the said other two sides are straight.

6. A seal as claimed in claim 4, characterised in that the said other two sides are curved.

7. A seal as claimed in any one of the preceding claims, characterised in that the sealing member (10) is retained in the seal by being confined between inner and outer cases (4, 1) formed by two interfitting flanged cylindrical portions (5, 2).

8. A seal as claimed in any one of claims 1 to 6, characterised in that the sealing member (21) is suitably bonded to a case (26) in the form of a flanged cylindrical portion.

9. A seal as claimed in any one of claims 2 to 6, characterised in that the sealing member comprise an insert (121, 135, 142) which is of generally annular form, which incorporates said plurality of depressions (127) in the said side (122) thereof and which is bonded to another member (124, 134, 141) of generally annular form and of flexible material forming another part of said seal.

10. A seal as claimed in claim 9, characterised in that said other member (124) is generally of U-shaped cross-section and suitably reinforced by a metallic member (125) of annular form and of right-angular cross-section.

11. A seal as claimed in claim 9, characterised in that said other member (134, 141) is of such cross-section as to enable it to be suitably bonded to a metallic member (137) of annular form and of right-angular cross-section.

12. A seal as claimed in either claim 10 or claim 11, characterised in that the circumferential outer surface (130) of said other member (124, 134, 141) immediately adjacent said insert (121, 135, 142) is encircled by a coiled spring ring (131) for at least assisting in maintaining said edge (123) of said insert in sealing engagement with one of said two relatively-rotatable parts.

13. A seal as claimed in any one of the preceding claims, characterised in that the seal is provided with a second sealing member (150).

14. A seal as claimed in any one of the preceding claims, characterised in that said continuous groove (17, 23) is of semi-circular cross-section or substantially so.

15. A seal as claimed in any one of claims 1 to 13, characterised in that said continuous groove (128) is of triangular cross-section or substantially so.

16. A seal as claimed in any one of claims 1 to 13, characterised in that said continuous groove (117) is of rectangular cross-section or substantially so.

**Patentansprüche**

1. Dichtung zur Verwendung zwischen zwei relativ zueinander drehbaren Teilen mit einem Dichtungselement (10, 21, 121, 135, 42) aus Fluorharz, das eine in einem Umfangsrand (15, 25, 123) endende Seite (14, 24, 122) und einen ersten Ringabschnitt benachbart zum Rand aufweist, in dem eine Strömungsmittelrückführeinrichtung (16, 22, 127) ausgebildet ist, und das im Betrieb mit einem der beiden relativ zueinander drehbaren, abzudichtenden Teile in Kontakt steht, wobei das Dichtungselement einen zweiten Ringabschnitt besitzt, in dem eine kontinuierliche Nut (17, 23, 117, 12B) parallel zum Rand (15, 25, 123), jedoch durch den ersten Ringabschnitt davon getrennt, angeordnet ist, dadurch gekennzeichnet, daß die kontinuierliche Nut (17, 23, 117, 128) im Betrieb nicht mit einem abzudichtenden Teil in Kontakt steht sondern einen vollen Kontakt zwischen dem ersten Ringabschnitt und einem der beiden abzudichtenden Teile sicherstellt, so daß eine größere Verbiegung des Dichtungselementes (10) im Bereich der Nut (17, 23, 117, 128) möglich ist.

2. Dichtung nach Anspruch 1, dadurch gekennzeichnet, daß die Strömungsmittelrückführeinrichtung (16, 22, 127) eine Vielzahl von Vertiefungen umfaßt, die mit Umfangsabstand voneinander um das Dichtungselement (10, 21, 121, 135, 142) herum angeordnet sind.

3. Dichtung nach Anspruch 2, dadurch gekennzeichnet, daß die Vertiefungen (16, 22, 127) in einem solchen Abstand vom Rand (15, 25, 123) angeordnet sind, daß ein kontinuierliches ununterbrochenes ringförmiges Dichtungsband (15a, 123a) benachbart zum Rand verbleibt.

4. Dichtung nach Anspruch 3, dadurch gekennzeichnet, daß die Vertiefungen (16, 22, 127) jeweils die Form eines Viereckes mit zwei gegenüberliegenden Seiten, welche parallel zum Rand (15, 25, 123) verlaufen, aufweisen, von denen eine länger ausgebildet ist und näher am Rand liegt als die andere, wobei jede der beiden anderen Seiten schiefwinklig zur längeren der beiden parallelen Seiten geneigt ist.

5. Dichtung nach Anspruch 4, dadurch gekennzeichnet, daß die anderen beiden Seiten gerade Seiten sind.

6. Dichtung nach Anspruch 4, dadurch gekennzeichnet, daß die anderen beiden Seiten gekrümmt sind.

7. Dichtung nach einem der vorangehenden Ansprüche, dadurch gekennzeichnet, daß das Dichtungselement (10) dadurch in der Dichtung gehalten wird, daß es zwischen ein inneres und ein äußeres Gehäuse (4, I) eingezwängt ist, die durch zwei ineinandergepaßte zylindrische Flanschabschnitte (5, 2) gebildet werden.

8. Dichtung nach einem der Ansprüche 1 bis 6, dadurch gekennzeichnet, daß das Dichtungselement (21) in geeigneter Weise mit einem Gehäuse (26) in der Form eines zylindrischen Flanschabschnittes verbunden ist.

9. Dichtung nach einem der Ansprüche 2 bis 6, dadurch gekennzeichnet daß das Dichtungselement einen Einsatz (121, 135, 142) umfaßt, der allgemein ringförmig ausgebildet ist, die Vielzahl der Vertiefungen (127) in seiner Seite (122) aufweist und mit einem anderen Element (124, 134, 141) allgemein ringförmiger Gestalt verbunden ist, das aus flexiblem Material besteht und einen anderen Teil der Dichtung bildet.

10. Dichtung nach Anspruch 9, dadurch gekennzeichnet, daß das andere Element (124) einen allgemein U-förmigen Querschnitt besitzt und durch ein metallisches Element (125) ringförmiger Gestalt und mit rechtwinkligem Querschnitt in geeigneter Weise verstärkt ist.

11. Dichtung nach Anspruch 9, dadurch gekennzeichnet, daß das andere Element (134, 141) einen solchen Querschnitt besitzt, daß dieser in geeigneter Weise mit einem metallischen Element (137) ringförmiger Gestalt und rechtwinkligem Querschnitt verbunden werden kann.

12. Dichtung nach Anspruch I0 oder 11, dadurch gekennzeichnet, daß die äußere Umfangsfläche (130) des anderen Elementes (124, 134, 141) unmittelbar benachbart zum Einsatz (121, 135, 142) von einem Schraubenfederring (131) umgeben ist, der zumindest dazu beiträgt, den Rand (123) des Einsatzes in Dichtungseingriff mit einem der beiden relativ zueinander drehbaren Teile zu halten.

13. Dichtung nach einem der vorangehenden Ansprüche, dadurch gekennzeichnet, daß die Dichtung mit einem zweiten Dichtungselement (150) versehen ist.

14. Dichtung nach einem der vorangehenden Ansprüche, dadurch gekennzeichnet, daß die kontinuierliche Nut (17, 23) einen halbkreisförmigen Querschnitt oder im wesentlichen einen solchen Querschnitt besitzt.

15. Dichtung nach einem der Ansprüche 1 bis 13, dadurch gekennzeichnet, daß die kontinuierliche Nut (128) einen dreieckförmigen Querschnitt oder im wesentlichen einen solchen besitzt.

16. Dichtung nach einem der Ansprüche 1 bis 13, dadurch gekennzeichnet, daß die kontinuierliche Nut (117) einen rechteckigen Querschnitt oder im wesentlichen einen solchen besitzt.

**Revendications**

1. Joint d'étanchéité destiné à être utilisé entre deux parties qui tournent l'une par rapport à l'autre, comprenant un organe d'étanchéité (10, 21, 121, 135, 42) d'une résine fluorée, qui a un côté (14, 24, 122) aboutissant à un bord circonférentiel (15, 25, 123) et ayant une première partie annulaire adjacente au bord, dans laquelle est formé un dispositif de renvoi de fluide (16, 22, 127) et qui, pendant l'utilisation, est au contact de l'une des deux parties qui tournent l'une par rapport à l'autre et qui doivent coopérer de manière étanche, l'organe d'étanchéité ayant une seconde partie annulaire dans laquelle est délimitée une gorge continue (17, 23, 117, 128) qui est parallèle au bord (15, 25, 123) mais qui est séparée du bord par la première partie annulaire, caractérisé en ce que la gorge continue (17, 23, 117, 128), pendant l'utilisation, n'est pas au contact de l'une des parties qui doit coopérer de manière étanche, mais assure un contact continu entre la première partie annulaire et l'une des deux parties qui doivent coopérer de manière étanche, en permettant une flexion accrue de l'organe d'étanchéité (10) dans la région de ladite gorge (17, 23, 117, 128).

2. Joint d'étanchéité selon la revendication 1, caractérisé en ce que le dispositif de renvoi de fluide (16, 22, 127) comporte plusieurs évidements espacés circonférentiellement les uns par rapport aux autres autour de l'organe d'étanchéité (10, 21, 121, 135, 142).

3. Joint d'étanchéité selon la revendication 2, caractérisé en ce que les évidements (16, 22, 127) sont séparés du bord (15, 25, 123) de manière qu'ils laissent une bande annulaire ininterrompue et continue d'étanchéité (15a, 123a) adjacente au bord.

4. Joint d'étanchéité selon la revendication 3, caractérisé en ce que les évidements (16, 22, 127) ont chacun la forme d'un quadrilatère ayant deux côtés opposés sensiblement parallèles audit bord (15, 25, 123) dont l'un est plus long que l'autre et plus proche du bord que l'autre, chacun des deux autres côtés étant incliné afin qu'il forme un angle aigu avec le plus long des deux côtés parallèles.

5. Joint d'étanchéité selon la revendication 4, caractérisé en ce que les deux autres côtés sont rectilignes.

6. Joint d'étanchéité selon la revendication 4, caractérisé en ce que les deux autres côtés sont courbes.

7. Joint d'étanchéité selon l'une quelconque des revendications précédentes, caractérisé en ce que l'organe d'étanchéité (10) est retenu dans le joint d'étanchéité par confinement entre des boîtiers interne et externe (4, 1) formés par deux parties cylindriques à flasques coopérant (5, 2).

8. Joint d'étanchéité selon l'une quelconque des revendications 1 à 6, caractérisé en ce que l'organe d'étanchéité (21) est collé de façon convenable à un boîtier (26) sous forme d'une partie cylindrique à flasque.

9. Joint d'étanchéité selon l'une quelconque des revendications 2 à 6, caractérisé en ce que l'organe d'étanchéité est un élément rapporté (121, 135, 142) de forme générale annulaire, ayant plusieurs évidements (127) dans son côté (122) et qui est collé à un autre organe (124, 134, 141) de forme générale annulaire et constitué d'un matériau flexible, formant une autre partie du joint d'étanchéité.

10. Joint d'étanchéité selon la revendication 9, caractérisé en ce que l'autre organe (124) a une section de forme générale en U et est convenablement renforcé par un organe métallique (125) de forme annulaire et de section à angle droit.

11. Joint d'étanchéité selon la revendication 9, caractérisé en ce que l'autre organe (134, 141) a une section telle qu'il peut être collé de façon convenable à un, organe métallique (137) de forme annulaire et de section à angle droit.

12. Joint d'étanchéité selon l'une des revendications 10 et 11, caractérisé en ce que la surface circonférentielle externe (130) de l'autre organe (124, 134, 141) immédiatement adjacente à l'élément rapporté (121, 135, 142) est entourée par une bague élastique hélicoïdale (131) facilitant au moins le maintien du bord (123) de l'élément rapporté en contact étanche avec l'une des deux parties qui tournent l'une par rapport à l'autre.

13. Joint d'étanchéité selon l'une quelconque des revendications précédentes, caractérisé en ce que le joint a un second organe d'étanchéité (150).

14. Joint d'étanchéité selon l'une quelconque des revendications précédentes, caractérisé en ce que la gorge continue (17, 23) a une section semi-circulaire ou pratiquement semi-circulaire.

15. Joint d'étanchéité selon l'une quelconque des revendications 1 à 13, caractérisé en ce que la gorge continue (128) a une section triangulaire ou pratiquement triangulaire.

16. Joint d'étanchéité selon l'une quelconque des revendications 1 à 13, caractérisé en ce que la gorge continue (117) a une section rectangulaire ou pratiquement rectangulaire.

FIG. 1.

FIG. 2

FIG. 3

FIG. 4.

FIG.6

FIG.7

FIG.8

FIG.9

AIR

28

27

26

OIL

21

24

23

22

25

X _____ X

FIG. 5

152

AIR

OIL

151

150

FIG. 10

(a)

117

(b)

117

(c)

117

(d)

117

FIG. 11